# EUROPÄISCHE PATENTSCHRIFT

(11) **EP 3 947 050 B1**
(45) Veröffentlichungstag und Bekanntmachung des Hinweises auf die Patenterteilung: **20.07.2022**
(21) Anmeldenummer: 21701272.3
(22) Anmeldetag: 19.01.2021
(51) Int. Cl.: B60R 16/037, B60R 25/24

(54) **SYSTEM UND VERFAHREN ZUR BESTIMMUNG EINES INBETRIEBSNAHMEZEITPUNKTS EINER FAHRZEUGFUNKTION EINES FAHRZEUGS**
SYSTEM AND METHOD FOR DETERMINING A TIME AT WHICH A VEHICLE FUNCTION OF A VEHICLE IS BROUGHT INTO USE
SYSTÈME ET PROCÉDÉ DE DÉTERMINATION D'UNE HEURE À LAQUELLE UNE FONCTION DE VÉHICULE D'UN VÉHICULE EST MISE EN SERVICE

(30) Priorität: 21.02.2020 DE 102020104590
(43) Veröffentlichungstag der Anmeldung: 09.02.2022
(73) Patentinhaber: Audi AG, 85045 Ingolstadt (DE)
(72) Erfinder: RUF, Markus, 73550 Waldstetten (DE); STAUB, Hannah, 76689 Karlsdorf-Neuthard (DE)
(86) Internationale Anmeldenummer: PCT/EP2021/050987
(87) Internationale Veröffentlichungsnummer: WO 2021/164968

(56) Entgegenhaltungen:
- DE-A1- 10 046 571
- DE-A1-102013 114 394
- DE-A1-102013 220 208
- DE-A1-102014 115 250

## Beschreibung

Die Erfindung betrifft ein System zur Bestimmung eines Inbetriebsnahmezeitpunkts einer Fahrzeugfunktion eines Fahrzeugs mit wenigstens einem Fahrzeug; wenigstens einem Schlüsselelement, das dem oder einem betreffenden Fahrzeug zugeordnet ist; wobei das Fahrzeug und das zugeordnete Schlüsselelement dazu eingerichtet sind miteinander Daten auszutauschen, wobei das System dazu eingerichtet ist, die Fahrzeugposition und die Schlüsselelementposition zu bestimmen, wobei das System dazu eingerichtet ist, das Fahrzeug in einen Fahrbetrieb zu setzen, wenn die Fahrzeugposition und die Schlüsselelementposition im Wesentlichen gleich sind, insbesondere wenn sich das Schlüsselelement innerhalb des Fahrzeugs befindet.

DE 100 46 571 offenbart ein System zur Bestimmung eines Inbetriebsnahmezeitpunkts einer Fahrzeugfunktion eines Fahrzeugs mit einem Schlüsselelement, das dem betreffenden Fahrzeug zugeordnet ist, wobei das Fahrzeug und das zugeordnete Schlüsselelement dazu eingerichtet sind miteinander Daten auszutauschen, wobei das System dazu eingerichtet ist, die Fahrzeugposition und die Schlüsselelementposition zu bestimmen, wobei das System dazu eingerichtet ist, das Fahrzeug in einen Fahrbetrieb zu setzen, wenn die Fahrzeugposition und die Schlüsselelementposition im Wesentlichen gleich sind. Das System ist ferner dazu eingerichtet, wenigstens eine bei Stillstand des Fahrzeugs aktivierbare Fahrzeugfunktion in Abhängigkeit von einer aktuellen Schlüsselelementposition automatisiert einzuschalten, wobei das Fahrzeug und das zugeordnete Schlüsselelement entfernt voneinander sind.

Aus der DE 10 2013 114 394 A1 ist ein Verfahren zur Authentifizierung eines Fahrers in einem Kraftfahrzeug mit einer im Kraftfahrzeug angeordneten Erkennungsvorrichtung bekannt.

Die GB 2551312 A zeigt ein System, das einen Energiesparmodus eines Fahrzeugs steuert. Das System umfasst einen Detektor, der eine Anwesenheit eines Nutzers in einem Fahrzeug erfasst und eine Steuerung, die auf Grundlage der Erfassung des Detektors bestimmt, ob der Nutzer im Fahrzeug anwesend ist, und die das Fahrzeug so steuert, dass es in den Energiesparmodus eintritt, wenn der Nutzer nicht im Fahrzeug ist.

Die JP 2012 80630 A zeigt eine Fahrzeugtemperatur-Steuervorrichtung mit einer Eingangs-Steuereinheit und einer Temperatur-Steuereinheit, die beide mit einem fahrzeuginternen LAN verbunden sind.

Die der Erfindung zu Grunde liegende Aufgabe wird darin gesehen, eine automatisierte Inbetriebnahme einer Fahrzeugfunktion eines sich im Stillstand befindlichen Fahrzeugs bereitzustellen ohne zusätzliche Nutzerinteraktion. Diese Aufgabe wird gelöst durch ein System mit den Merkmalen des Patentanspruchs 1 und durch ein Verfahren mit den Merkmalen des Patentanspruchs 10 . Vorteilhafte Ausgestaltungen mit zweckmäßigen Weiterbildungen sind in den abhängigen Patentansprüchen angegeben.

Vorgeschlagen wird also ein System zur Bestimmung eines Inbetriebsnahmezeitpunkts einer Fahrzeugfunktion eines Fahrzeugs mit wenigstens einem Fahrzeug; wenigstens einem Schlüsselelement, das dem oder einem betreffenden Fahrzeug zugeordnet ist; wobei das Fahrzeug und das zugeordnete Schlüsselelement dazu eingerichtet sind miteinander Daten auszutauschen, wobei das System dazu eingerichtet ist, die Fahrzeugposition und die Schlüsselelementposition zu bestimmen, wobei das System dazu eingerichtet ist, das Fahrzeug in einen Fahrbetrieb zu setzen, wenn die Fahrzeugposition und die Schlüsselelementposition im Wesentlichen gleich sind, insbesondere wenn sich das Schlüsselelement innerhalb des Fahrzeugs befindet. Dabei ist vorgesehen, dass das System ferner dazu eingerichtet ist, wenigstens eine bei Stillstand des Fahrzeugs aktivierbare Fahrzeugfunktion in Abhängigkeit von einer aktuellen Schlüsselelementposition, insbesondere von einer sich relativ zur Fahrzeugposition ändernden Schlüsselelementposition, automatisiert einzuschalten, wobei das Fahrzeug und das zugeordnete Schlüsselelement entfernt voneinander sind, insbesondere in einer Distanz von wenigstens zehn Metern voneinander entfernt sind.

Der Inbetriebsnahmezeitpunkt der Fahrzeugfunktion wird dynamisch anhand der Bewegung des Schlüsselelements relativ zu dem Fahrzeug bestimmt, ohne dass ein Nutzer einen genauen Zeitpunkt zum Einschalten der Fahrzeugfunktion vorher festlegen muss. Das Einschalten und die Ausführung der Fahrzeugfunktion erfolgt automatisch, so dass das Fahrzeug für einen möglichen Start vorbereitet ist.

Die aktivierbare Fahrzeugfunktion kann zusätzlich in Abhängigkeit von einem Wahrscheinlichkeitswert eingeschalten werden, wobei der Wahrscheinlichkeitswert wenigstens in Abhängigkeit von einer sich ändernden Relativposition bestimmt wird, wobei die Relativposition den laufenden Vergleich zwischen Fahrzeugposition und Schlüsselelementposition umfasst. Der Einbezug des Wahrscheinlichkeitswerts, der ein weiterer Indikator dafür ist ob das Fahrzeug in Betrieb genommen wird, kann die Aktivierung einer oder mehrere Funktionen der Fahrzeugfunktionen nach sich ziehen, um so eine optimale Vorbereitung des Fahrzeugs vor dem Start zu gewährleisten und ferner den Verschleiß von Fahrzeugkomponenten reduzieren.

Die aktivierbare Fahrzeugfunktion kann wenigstens eine der folgenden Funktionen umfassen: Klimatisierung eines Innenraums des Fahrzeugs, Laden einer Batterie des Fahrzeugs und Konditionierung einer Brennstoffzelle des Fahrzeugs.

Das System kann wenigstens eine Servereinrichtung umfassen, die dazu eingerichtet ist, mit dem Fahrzeug und dem zugeordneten Schlüsselelement Daten auszutauschen. Die Servereinrichtung kann als Vermittler zwischen dem Fahrzeug und dem zugeordneten Schlüsselelement dienen, so dass ein Datenaustausch zwischen Fahrzeug und Schlüsselelement auch über größere Distanzen hinweg ermöglicht werden kann.

Die Servereinrichtung kann dazu eingerichtet sein, den Wahrscheinlichkeitswert zu berechnen oder/und eine voraussichtliche Dauer zu berechnen bis das zugeordnete Schlüsselelement bei dem Fahrzeug angekommen ist. Hierdurch kann die Rechenlast am Fahrzeug oder/und dem Schlüsselelement reduziert werden. Ferner kann die Servereinrichtung basierend auf dem Wahrscheinlichkeitswert oder/und der voraussichtlichen Dauer die aktivierbare Fahrzeugfunktion des Fahrzeugs einschalten.

Das Fahrzeug und das Schlüsselelement können dazu eingerichtet sein, die Fahrzeugposition und die Schlüsselelementposition mittels eines Satelliten gestützten Positionierungssystems, insbesondere GPS, Galileo und dergleichen, zu bestimmen.

Die Servereinrichtung kann dazu eingerichtet sein, die Positionsbestimmung des Fahrzeugs und des zugeordneten Schlüsselelements mittels weiterer Lagedaten, wie etwa lokaler Karten oder/und Gebäudeinformationen, durchzuführen. Dies erlaubt eine genauere Positionsbestimmung und kann somit eine verbesserte Berechnung des Wahrscheinlichkeitswerts oder/und der voraussichtlichen Dauer ermöglichen.

Das System ist dazu eingerichtet, die Schlüsselelementposition eines bei der letzten Inbetriebnahme des Fahrzeugs genutzten, zugeordneten Schlüsselelements mit einer höheren Priorität zu bestimmen. Bei Nutzung von mehreren dem Fahrzeug zugeordneten Schlüsselelementen kann somit die Reihenfolge geregelt werden, nach der die Schlüsselelementpositionen bestimmt und entsprechende Funktionen der Fahrzeugfunktion eingeschaltet werden.

Das System kann dazu eingerichtet sein, wiederholende Muster von Schlüsselelementpositionen und Fahrzeugpositionen zu speichern und derartige Muster zu erkennen. Anhand dieser Muster können Funktionen der aktivierbaren Fahrzeugfunktion in unterschiedlicher Reihenfolge zu unterschiedlichen Zeitpunkten eingeschaltet und ausgeführt werden. Ferner können sie die Genauigkeit verbessern mit der der Wahrscheinlichkeitswert oder/und die voraussichtliche Dauer berechnet werden.

Das Schlüsselelement kann einen Fahrzeugschlüssel, ein Smartphone, oder/und eine Key Card umfassen.

Die obige Aufgabe wird auch gelöst durch ein Verfahren nach Anspruch 10 zur Bestimmung eines Inbetriebsnahmezeitpunkts einer Fahrzeugfunktion umfassend die Schritte:

Bestimmen der Fahrzeugposition eines Fahrzeugs und der Schlüsselelementposition von wenigstens einem Schlüsselelement, das dem Fahrzeug zugeordnet ist, wobei das Fahrzeug in einen Fahrbetrieb versetzt wird, wenn die Fahrzeugposition und die Schlüsselelementposition im Wesentlichen gleich sind, insbesondere wenn sich das Schlüsselelement innerhalb des Fahrzeugs befindet;Austauschen von Daten zwischen dem Fahrzeug und dem oder einem betreffenden zugeordneten Schlüsselelement;Automatisiertes Einschalten von wenigstens einer bei Stillstand des Fahrzeugs aktivierbarer Fahrzeugfunktion in Abhängigkeit von einer aktuellen Schlüsselelementposition, insbesondere von einer sich relativ zur Fahrzeugposition ändernden Schlüsselelementposition wobei die wenigstens eine aktivierbare Fahrzeugfunktion eine standortbedingte Funktion umfasst, wobei das Fahrzeug und das zugeordnete Schlüsselelement entfernt voneinander sind, insbesondere in einer Distanz von wenigstens zehn Metern voneinander entfernt sind, und wobei die Schlüsselelementposition eines bei der letzten Inbetriebnahme des Fahrzeugs genutzten zugeordneten Schlüsselelements mit einer höheren Priorität bestimmt wird.

Ferner kann ein Wahrscheinlichkeitswert berechnet werden oder/und eine voraussichtliche Dauer bis das zugeordnete Schlüsselelement bei dem Fahrzeug angekommen ist.

Die Fahrzeugposition und die Schlüsselelementposition kann mittels eines Satelliten gestützten Positionierungssystems, insbesondere GPS, Galileo und dergleichen, bestimmt werden.

Die Positionsbestimmung des Fahrzeugs und des zugeordneten Schlüsselelements kann mittels weiterer Lagedaten, wie etwa lokaler Karten oder/und Gebäudeinformationen, verbessert werden.

Die Schlüsselelementposition eines bei der letzten Inbetriebnahme des Fahrzeugs genutzten zugeordneten Schlüsselelements kann mit einer höheren Priorität bestimmt werden.

Wiederholende Muster von Schlüsselelementpositionen und Fahrzeugpositionen können gespeichert werden und derartige Muster erkannt werden.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: eine vereinfachte und schematische Prinzipdarstellung einer Ausführungsform eines Systems zur Bestimmung eines Inbetriebsnahmezeitpunkts einer Fahrzeugfunktion eines Fahrzeugs;
- Fig. 2a: eine vereinfachte und schematische Darstellung eines Lageplans;
- Fig. 2b: eine vereinfachte und schematische Seitenansicht eines in Fig. 2a illustrierten Gebäudes;
- Fig. 3: ein Ablaufplan einer Ausführungsform eines Verfahrens zur Bestimmung eines Inbetriebsnahmezeitpunkts einer Fahrzeugfunktion.

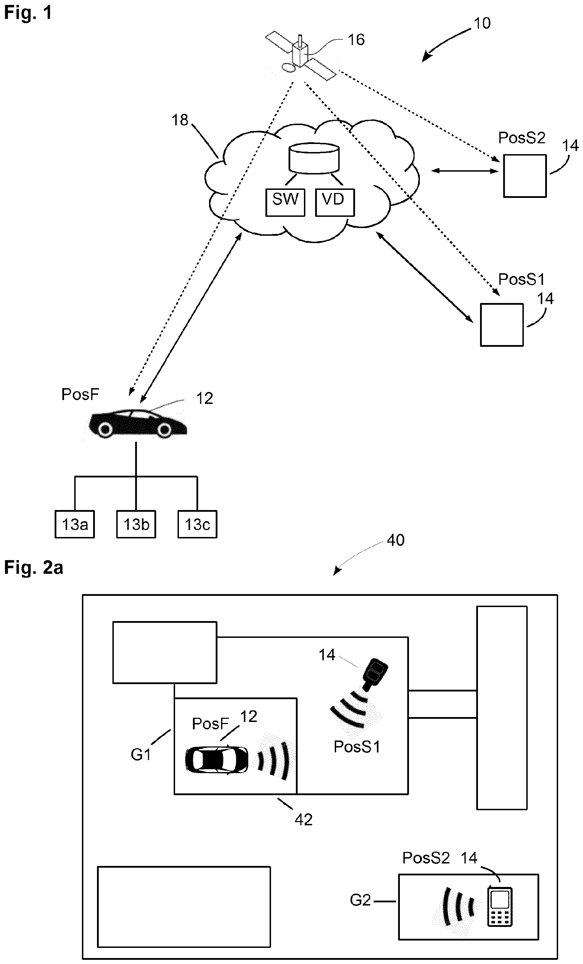

In Fig. 1 ist ein System 10 in einer vereinfachten und schematischen Prinzipdarstellung einer Ausführungsform der vorliegenden Erfindung dargestellt. Das System umfasst ein Fahrzeug 12 und wenigstens ein dem Fahrzeug 12 zugeordnetes Schlüsselelement 14. Im gezeigten Beispiel sind dem Fahrzeug 12 zwei Schlüsselelemente 14 zugeordnet.

Zwischen dem Fahrzeug 12 und dem zugeordneten Schlüsselelement 14 findet ein Datenaustausch statt, was durch die durchgezogenen Doppelpfeile illustriert ist. Die Daten beinhalten insbesondere Positionsangaben PosF, PosS1, PosS2 bezüglich des Fahrzeugs 12 und des Schlüsselelements 14. Ferner können in den ausgetauschten Daten weitere Informationen, wie zum Beispiel einem Nutzer zugeordnete Authentifizierungsdaten, die Häufigkeit, mit welcher der Nutzer das Fahrzeug 12 betreibt, die Schlüsselelementaktivität, der aktuelle Betriebszustand des Fahrzeugs 12 (Innenraumtemperatur, Batteriestand, etc.) oder ähnliches enthalten sein.

Die Fahrzeugposition PosF und die Schlüsselelementposition PosS1, PosS2 werden durch das System 10 bestimmt. Wenn die Fahrzeugposition PosF und wenigstens eine der Schlüsselelementpositionen PosS1, PosS2 im Wesentlichen gleich sind, woraus beispielsweise geschlossen werden kann, dass sich das Schlüsselelement 14 innerhalb des Fahrzeugs 12 befindet, wird das Fahrzeug 12 in Betrieb gesetzt.

Ferner wird bei Stillstand des Fahrzeugs 12 eine aktivierbare Fahrzeugfunktion 13a, 13b, 13c durch das System 10 in Abhängigkeit von einer aktuellen Schlüsselelementposition PosS1, PosS2 insbesondere von einer sich relativ zur Fahrzeugposition PosF ändernden Schlüsselelementposition PosS1, PosS2 automatisch eingeschaltet. Hierbei sind das Fahrzeug 12 und das zugeordnete Schlüsselelement 14 in einer Distanz von wenigstens zehn Metern voneinander entfernt.

Die Positionsbestimmung des Fahrzeugs 12 und des Schlüsselelements 14 wird fortlaufend vom System 10 durchgeführt, so dass ein möglicher Start des Fahrzeugs 12 rechtzeitig erkannt und die Fahrzeugfunktion 13a, 13b, 13c entsprechend eingeschaltet und ausgeführt wird. Somit wird das Fahrzeug 12 automatisch vorbereitet, ohne dass eine Nutzerinteraktion erforderlich ist.

In einer Ausführungsform der vorliegenden Erfindung kann die aktivierbare Fahrzeugfunktion 13a, 13b, 13c zusätzlich in Abhängigkeit von einem Wahrscheinlichkeitswert SW eingeschalten werden, wobei der Wahrscheinlichkeitswert SW wenigstens in Abhängigkeit von einer sich ändernden Relativposition bestimmt wird. Die Relativposition kann den laufenden Vergleich zwischen Fahrzeugposition PosF und Schlüsselelementposition PosS1, PosS2 umfassen. Mit anderen Worten, der Wahrscheinlichkeitswert SW kann von der aktuellen Distanz des Schlüsselelements 14 zu dem Fahrzeug 12 oder/und der Geschwindigkeit des Schlüsselelements 14 relativ zu dem stehenden Fahrzeug 12 abhängen. Er kann somit ein Maß für die Startwahrscheinlichkeit sein. Bei geringer werdender Distanz steigt die Startwahrscheinlichkeit, so dass die durch die Fahrzeugfunktion 13a, 13b, 13c auszuführende/en Funktion/en für eine Vorbereitung des Fahrzeugs 12 aktiviert werden können. Für die Berechnung des Wahrscheinlichkeitswertes SW können verschiedene, dem Fachmann bekannte, Methoden benutzt werden. Zum Beispiel können hierbei auch Verfahren, die auf maschinellem Lernen, künstlicher Intelligenz, oder ähnlichem basieren, angewandt werden. Ferner können die Schlüsselelemente auch Nutzern (Erkennung über Fahrweise, Gewicht, Sprache, etc.) zugeordnet werden und dann individuelle (voneinander variierende) Wahrscheinlichkeiten bestimmt werden.

Die aktivierbare Fahrzeugfunktion 13a, 13b, 13c kann wenigstens eine der folgenden Funktionen umfassen, die Klimatisierung 13a eines Innenraums des Fahrzeugs 12, das Laden 13b einer Batterie des Fahrzeugs 12, und die Konditionierung 13c einer Brennstoffzelle des Fahrzeugs 12. Jedoch ist die vorliegende Erfindung nicht darauf beschränkt. Weitere Funktionen sind möglich, wie zum Beispiel das automatische Einschalten eines dem Fahrzeugs 12 zugehörigen Bordcomputers oder das Ausführen von entsprechenden IT Anwendungen (Aktivierung eines Routenplaners, Abfrage des aktuellen Verkehrsaufkommen, oder ähnliches). Ebenso möglich sind durch das System 10 erlernbare Funktionen. Zum Beispiel kann eine einem Schlüsselelement 14 speziell zugeordnete Funktion eingeschaltet und ausgeführt werden, wie das automatische Anpassen einer Sitzeinstellung für einen entsprechenden Nutzer. Die Fahrzeugfunktion 13a, 13b, 13c kann auch standortbedingte Funktionen umfassen, die automatisch eingeschaltet werden können, je nachdem wo sich das Fahrzeug 12 oder/und das Schlüsselelement 14 befindet.

Abhängig von der Schlüsselelementposition PosS1, PosS2 und dem Wahrscheinlichkeitswert SW können daher eine oder mehrere der oben aufgeführten Funktionen aktiviert werden. Zum Beispiel kann das Laden 13b der Batterie des Fahrzeugs 12 erst kurz vor Start des Fahrzeugs 12 erfolgen, so dass sie sich während des Stillstands des Fahrzeugs 12 möglichst lange in einem Zustand mit wenig Ladung befindet. Dies kann das vorzeitige Altern der Batterie verringern. Diese Funktion kann bei einer geringen Distanz des Schlüsselelements 14 zu dem Fahrzeug 12 und entsprechend hoher Startwahrscheinlichkeit eingeschaltet werden. Ferner kann die Klimatisierung 13a des Innenraums des Fahrzeugs 12 bei einer größeren Distanz und einer ge-Startwahrscheinlichkeit stattfinden, um so eine optimale Zieltemperatur bei einem möglichen Start des Fahrzeugs 12 zu erreichen. Ebenso kann die Konditionierung 13c der Brennstoffzelle des Fahrzeugs 12 so erfolgen, dass eine hohe Leistung beim Start des Fahrzeugs 12 abrufbar ist.

Das System 10 kann ferner eine Servereinrichtung 18 umfassen, wie in Fig. 1 dargestellt, die mit dem Fahrzeug 12 und dem zugeordneten Schlüsselelement 14 Daten austauscht. Die Servereinrichtung 18 kann die Positionsdaten PosF des Fahrzeugs 12 und PosS1, PosS2 des betreffenden Schlüsselelements 14 fortlaufend empfangen und speichern. Dies ermöglicht die Bewegung des Schlüsselelements 14 zu verfolgen. Ebenso kann durch die Servereinrichtung 18 die aktuelle Schlüsselelementposition PosS1, PosS2 kontinuierlich an das Fahrzeug 12 übermittelt werden, auch wenn sich das Schlüsselelement 14 in einer größeren Distanz vom Fahrzeug 12 entfernt befindet. Hierbei kann die Servereinrichtung 18 als Vermittler zwischen dem Fahrzeug 12 und dem Schlüsselelement 14 fungieren. Beispiele für die Servereinrichtung 18 umfassen ein Cloud-Service-System, oder/und einen oder mehrere Servereinheiten. Dies ist jedoch nicht einschränkend. Weitere Kommunikations- und Datenverarbeitungssysteme sind möglich.

Des Weiteren kann der Wahrscheinlichkeitswert SW oder/und eine voraussichtliche Dauer VD, bis das zugeordnete Schlüsselelement 14 bei dem Fahrzeug 12 angekommen ist, durch die Servereinrichtung 18 berechnet werden. Mittels der gespeicherten Schlüsselelementpositionen kann die relative Distanz zum Fahrzeug 12 und somit die Startwahrscheinlichkeit oder/und die Dauer anhand bekannter Methoden berechnet werden. Zum Beispiel kann die Servereinrichtung basierend auf diesen Informationen ein Signal an das Fahrzeug 12 senden um die Fahrzeugfunktion automatisch "aus der Ferne" einzuschalten. Dies kann eine optimale Vorbereitung des Fahrzeugs 12 vor dem Start ermöglichen.

In einer Ausführungsform können das Fahrzeug 12 und das Schlüsselelement 14 die Fahrzeugposition PosF und die Schlüsselelementposition PosS1, PosS2 mittels eines Satelliten gestützten Positionierungssystems 16, wie in Fig. 1 gezeigt, insbesondere GPS, Galileo und dergleichen, bestimmen. Diese Positionsangaben können dann an die Servereinrichtung 18 zur weiteren Verarbeitung übermittelt werden. Mithilfe dieser Positionsbestimmung können alle dem Fahrzeug 12 zugeordneten Schlüsselelemente 14 mit ihrer relativen Lage zum (stehenden) Fahrzeug 12 erfasst werden.

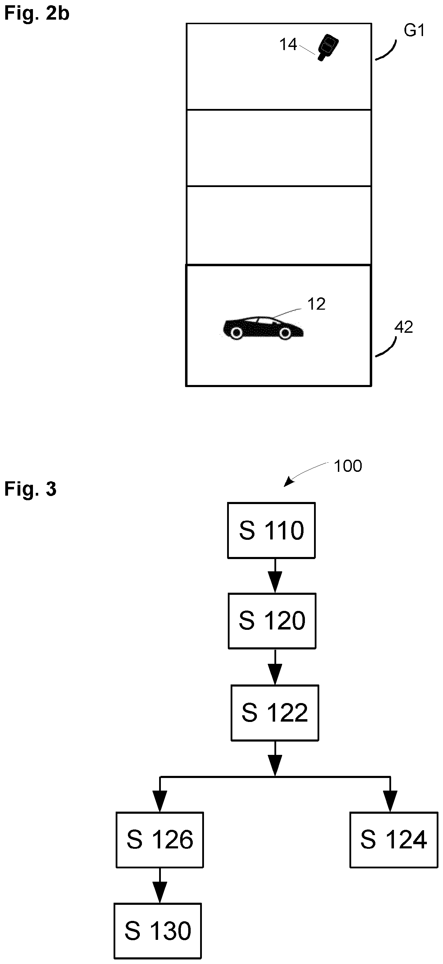

Hierbei kann die Servereinrichtung 18 die Positionsbestimmung des Fahrzeugs 12 und des zugeordneten Schlüsselelements 14 mittels weiterer Lagedaten, wie etwa lokaler Karten oder/und Gebäudeinformation verbessern. In diesem Zusammenhang zeigt Fig. 2a eine vereinfachte und schematische Darstellung eines lokalen Lageplans 40 in Draufsicht. Fig. 2b zeigt eine vereinfachte und schematische Seitenansicht eines in Fig. 2a illustrierten Gebäudes G1 mit einer Tiefgarage. In dem gezeigten Beispiel kann sich ein erstes, dem Fahrzeug 12 zugeordnetes Schlüsselelement 14 im Gebäude G1 befinden. Ferner kann sich ein zweites, dem Fahrzeug 12 zugeordnetes Schlüsselelement 14 in einem Gebäude G2 befinden. Das Fahrzeug 12 kann auf einem Parkplatz, zum Beispiel in einer Tiefgarage 42, wie in Fig. 2b gezeigt, abgestellt sein. In dem in Fig. 2b gezeigten Beispiel befindet sich das erste Schlüsselelement 14 im dritten Stock des Gebäudes G1. Die Distanz, die nötig ist, bis zum Parkplatz des Fahrzeugs 12 zu kommen kann anhand der Gebäudeinformation bei der Berechnung des Wahrscheinlichkeitswertes SW oder/und Dauer mitberücksichtig werden. Dies ermöglicht den Inbetriebsnahmezeitpunkt der Fahrzeugfunktion 13a, 13b, 13c genauer zu bestimmen. Auch können, wie vorher beschrieben, abhängig von der Fahrzeugposition PosF oder/und Schlüsselposition PosS1, PosS2 verschiedene Funktionen der Fahrzugfunktion 13a, 13b, 13c eingeschaltet werden. Zum Beispiel kann mittels des lokalen Lageplans 40 erkannt werden, dass sich das Fahrzeug 12 in der Tiefgarage 42 befindet. Wird beispielsweise davon ausgegangen, dass es in einer Tiefgarage eher kühl ist, kann es nötig sein, zusätzlich eine Sitzheizung zu aktivieren, um so einen verbesserten Komfort für einen Nutzer zu bieten. Eine solches Szenario ist beispielsweise auch denkbar, wenn das Fahrzeug 12 auf einem Außenparkplatz abgestellt ist und die gemessene Außentemperatur als weitere Information zur Verfügung steht.

Erfindungsgemäß wird die Schlüsselelementposition PosS1, PosS2 mit einer höheren Priorität bestimmt für ein Schlüsselelement 14, das bei der letzten Inbetriebnahme des Fahrzeugs 12 genutzt wurde. Wenn zum Beispiel mehrere dem Fahrzeug 12 zugeordnete Schlüsselelemente 14 genutzt werden, wie in Fig. 1 und Fig. 2a illustriert, kann hierdurch eine Reihenfolge festgelegt werden, nach welcher die Schlüsselelementpositionen PosS1, PosS2 ermittelt und die Fahrzeugfunktion 13a, 13b, 13c eingeschaltet wird. Zum Beispiel ist es wahrscheinlicher, dass ein zuletzt genutztes Schlüsselelement 14 (bspw. Erstschlüssel), das bei einer Fahrt mit dem Fahrzeug 12 zu einer Geschäftsadresse (zur Arbeit), insbesondere regelmäßig, benutzt wurde, eher (wieder) zum Betrieb des Fahrzeugs gebraucht wird, als ein anderes, dem Fahrzeug 12 zugeordnetes Schlüsselelement 14 (bspw. Zweitschlüssel), das sich beispielsweise an einer Privatadresse des Nutzers (zu Hause) befindet.

Weitere Ausführungsformen sind möglich. Zum Beispiel kann eine Priorität basierend auf der Häufigkeit, mit der ein Schlüsselelement 14 benutzt wird, zugewiesen werden. In einem weiteren, nicht einschränkenden Beispiel, kann die Priorität auch abhängig von der Geschwindigkeit, mit der sich die dem Fahrzeug 12 zugeordneten Schlüsselelemente 14 bewegen, zugewiesen werden. Dies kann dynamisch geschehen, so dass immer das Schlüsselelement 14, das sich am schnellsten bewegt (und somit das Fahrzeug 12 wohl am ehesten bzw. frühsten erreicht) eine hohe Priorität hat. Ebenso ist es möglich, dass die Priorität anhand der entsprechenden Distanz der Schlüsselelemente 14 zu dem Fahrzeug 12 zugewiesen wird, so dass das dem am Fahrzeug 12 am nächsten befindliche Schlüsselelement 14 ein hohe Priorität hat.

Ferner können sich wiederholende Muster von Schlüsselelementpositionen PosS1, PosS2 und Fahrzeugpositionen PosF durch das System 10 gespeichert und erkannt werden. Anhand dieser Muster können die Funktionen der aktivierbaren Fahrzeugfunktion 13a, 13b, 13c in unterschiedlicher Reihenfolge zu unterschiedlichen Zeitpunkten eingeschaltet und ausgeführt werden.

Ebenso lassen sich anhand der Bewegungsmuster weitere Rückschlüsse auf nutzerspezifische Eigenschaften ziehen und somit ein entsprechendes Repertoire an Funktionen speziell für ein Schlüsselelement 14 zuordnen.

Das Schlüsselelement 14 kann als Fahrzeugschlüssel, Smartphone, oder/und Key Card ausgeführt sein. Die vorliegende Erfindung ist jedoch nicht auf diese beschränkt, weitere Schlüsselelemente 14 wie zum Beispiel Tablets, Laptops, etc., sind möglich.

In Fig. 3 ist ein Ablaufplan eines Verfahrens 100 zur Bestimmung der Inbetriebnahme einer Fahrzeugfunktion einer Ausführungsform dargestellt.

In Schritt S110 wird die Fahrzeugposition PosF eines Fahrzeugs 12 und die Schlüsselelementposition PosS1, PosS2 von wenigstens einem Schlüsselelement 14, das dem Fahrzeug 12 zugeordnet ist, bestimmt.

In Schritt S120 werden zwischen dem Fahrzeug 12 und dem oder einem betreffenden zugeordneten Schlüsselelement 14 Daten ausgetauscht. Wie vorher beschrieben, beinhalten diese Daten die Positionsangaben PosF, PosS1, PosS2 des Fahrzeugs 12 und der zugeordneten Schlüsselelemente 14.

Basierend auf den Positionsangaben PosF, PosS1, PosS2 wird in einem weiteren Schritt S122 bestimmt, ob sich ein dem Fahrzeug 12 zugeordnetes Schlüsselelement 14 in dem Fahrzeug 12 befindet. Wenn dies zutrifft, dann kann im Schritt S124 das Fahrzeug 12 in Betrieb gesetzt werden. Falls sich keines der dem Fahrzeug 12 zugeordneten Schlüsselelemente 14 in dem Fahrzeug 12 befindet wird geht das Verfahren in den Schritt S130 über.

In Schritt S130 findet ein automatisiertes Einschalten von wenigstens einer bei Stillstand des Fahrzeugs 12 aktivierbaren Fahrzeugfunktion 13a, 13b, 13c in Abhängigkeit von einer aktuellen Schlüsselelementposition PosS1, PosS2, insbesondere von einer sich relativ zur Fahrzeugposition PosF ändernden Schlüsselelementposition PosS1, PosS2, statt. Hierbei sind das Fahrzeug 12 und das zugeordnete Schlüsselelement 14 entfernt voneinander, insbesondere in einer Distanz von wenigstens zehn Metern.

In einem weiteren Schritt S126 kann die Berechnung eines Wahrscheinlichkeitswertes SW oder/und einer voraussichtlichen Dauer bis das zugeordnete Schlüsselelement 14 bei dem Fahrzeug 12 angekommen ist durchgeführt werden. Auf Basis dieses Wahrscheinlichkeitswertes SW oder/und Dauer kann eine oder mehrere Funktion/en der aktivierbaren Fahrzeugfunktion 13a, 13b, 13c eingeschaltet werden.

Ferner kann die Fahrzeugposition PosF und Schlüsselelementposition PosS1, PosS2 in einem weiteren Schritt mittels eines Satelliten gestützten Positionierungssystem 16, insbesondere GPS, Galileo und dergleichen bestimmt werden. Dies kann durch Einbezug weitere Lagedaten, wie etwa lokaler Karten oder/und Gebäudeinformationen verbessert werden.

In einem weiteren Schritt wird die Schlüsselelementposition PosS1, PosS2 eines bei der letzten Inbetriebnahme des Fahrzeugs 12 genutzten zugeordneten Schlüsselelement 14 mit höherer Priorität bestimmt.

Ebenso können sich wiederholende Muster von Schlüsselelementpositionen PosS1, PosS2 und Fahrzeugpositionen PosF gespeichert und erkannt werden. Mittels dieser Muster können die Funktionen der aktivierbaren Fahrzeugfunktion 13a, 13b, 13c zu unterschiedlichen Zeitpunkten eingeschaltet und ausgeführt werden.

## Patentansprüche

1. System (10) zur Bestimmung eines Inbetriebsnahmezeitpunkts einer Fahrzeugfunktion eines Fahrzeugs (12) mit
wenigstens einem Fahrzeug (12);
wenigstens einem Schlüsselelement (14), das dem oder einem betreffenden Fahrzeug (12) zugeordnet ist;
wobei das Fahrzeug (12) und das zugeordnete Schlüsselelement (14) dazu eingerichtet sind miteinander Daten auszutauschen,
wobei das System (10) dazu eingerichtet ist, die Fahrzeugposition (PosF) und die Schlüsselelementposition (PosS1, PosS2) zu bestimmen,
wobei das System (10) dazu eingerichtet ist, das Fahrzeug (12) in einen Fahrbetrieb zu setzen, wenn die Fahrzeugposition (PosF) und die Schlüsselelementposition (PosS1, PosS2) im Wesentlichen gleich sind, insbesondere wenn sich das Schlüsselelement (14) innerhalb des Fahrzeugs (12) befindet,
**dadurch gekennzeichnet, dass** das System (10) ferner dazu eingerichtet ist, wenigstens eine bei Stillstand des Fahrzeugs (12) aktivierbare Fahrzeugfunktion (13a, 13b, 13c) in Abhängigkeit von einer aktuellen Schlüsselelementposition (PosS1, PosS2), insbesondere von einer sich relativ zur Fahrzeugposition (PosF) ändernden Schlüsselelementposition (PosS1, PosS2), automatisiert einzuschalten, wobei die wenigstens eine aktivierbare Fahrzeugfunktion (13a, 13b, 13c) eine standortbedingte Funktion umfasst, wobei das Fahrzeug (12) und das zugeordnete Schlüsselelement (14) entfernt voneinander sind, insbesondere in einer Distanz von wenigstens zehn Metern voneinander entfernt sind, und wobei die Schlüsselelementposition (PosS1, PosS2) eines bei der letzten Inbetriebnahme des Fahrzeugs (12) genutzten zugeordneten Schlüsselelements (14) mit einer höheren Priorität bestimmt wird.

2. System (10) nach Anspruch 1, **dadurch gekennzeichnet, dass** es dazu eingerichtet ist, die aktivierbare Fahrzeugfunktion (13a, 13b, 13c) zusätzlich in Abhängigkeit von einem Wahrscheinlichkeitswert (SW) einzuschalten, wobei der Wahrscheinlichkeitswert (SW) wenigstens in Abhängigkeit von einer sich ändernden Relativposition bestimmt wird, wobei die Relativposition den laufenden Vergleich zwischen Fahrzeugposition (PosF) und Schlüsselelementposition (13a, 13b, 13c) umfasst.

3. System (10) nach Anspruch 1 oder 2, **dadurch gekennzeichnet, dass** die aktivierbare Fahrzeugfunktion (13a, 13b, 13c) wenigstens eine der folgenden Funktionen umfasst:
Klimatisierung (13a) eines Innenraums des Fahrzeugs;
Laden (13b) einer Batterie des Fahrzeugs;
Konditionierung (13c) einer Brennstoffzelle des Fahrzeugs.

4. System (10) nach einem der vorhergehenden Ansprüche, **dadurch gekennzeichnet, dass** es wenigstens eine Servereinrichtung (18) umfasst, die dazu eingerichtet ist, mit dem Fahrzeug (12) und dem zugeordneten Schlüsselelement (14) Daten auszutauschen.

5. System (10) nach Anspruch 4, **dadurch gekennzeichnet, dass** die Servereinrichtung (18) dazu eingerichtet ist, den Wahrscheinlichkeitswert (SW) zu berechnen oder/und eine voraussichtliche Dauer zu berechnen bis das zugeordnete Schlüsselelement (14) bei dem Fahrzeug (12) angekommen ist.

6. System (10) nach einem der vorhergehenden Ansprüche, **dadurch gekennzeichnet, dass** das Fahrzeug (12) und das Schlüsselelement (14) dazu eingerichtet sind, die Fahrzeugposition (PosF) und die Schlüsselelementposition (PosS1, PosS2) mittels eines Satelliten gestützten Positionierungssystems (16), insbesondere GPS, Galileo und dergleichen, zu bestimmen.

7. System (10) nach Anspruch 6, **dadurch gekennzeichnet, dass** die Servereinrichtung (18) dazu eingerichtet ist, die Positionsbestimmung des Fahrzeugs (12) und des zugeordneten Schlüsselelements (14) mittels weiterer Lagedaten, wie etwa lokaler Karten (40) oder/und Gebäudeinformationen, zu verbessern.

8. System (10) nach einem der vorhergehenden Ansprüche, **dadurch gekennzeichnet, dass** es dazu eingerichtet ist, wiederholende Muster von Schlüsselelementpositionen (PosS1, PosS2) und Fahrzeugpositionen (PosF) zu speichern und derartige Muster zu erkennen.

9. System (10) nach einem der vorhergehenden Ansprüche, **dadurch gekennzeichnet, dass** das Schlüsselelement (14) einen Fahrzeugschlüssel, ein Smartphone, oder/und eine Key Card umfasst.

10. Computer-implementiertes Verfahren (100) zur Bestimmung eines Inbetriebsnahmezeitpunkts einer Fahrzeugfunktion umfassend die Schritte:
Bestimmen (110) der Fahrzeugposition (PosF) eines Fahrzeugs (12) und der Schlüsselelementposition (PosS1, PosS2) von wenigstens einem Schlüsselelement (14), das dem Fahrzeug (12) zugeordnet ist, wobei das Fahrzeug (12) in einen Fahrbetrieb versetzt wird, wenn die Fahrzeugposition (PosF) und die Schlüsselelementposition (PosS1, PosS2) im Wesentlichen gleich sind, insbesondere wenn sich das Schlüsselelement (14) innerhalb des Fahrzeugs (12) befindet;
Austauschen (120) von Daten zwischen dem Fahrzeug (12) und dem oder einem betreffenden zugeordneten Schlüsselelement (14);
Automatisiertes Einschalten (130) von wenigstens einer bei Stillstand des Fahrzeugs (12) aktivierbarer Fahrzeugfunktion (13a, 13b, 13c) in Abhängigkeit von einer aktuellen Schlüsselelementposition (PosS1, PosS2), insbesondere von einer sich relativ zur Fahrzeugposition (PosF) ändernden Schlüsselelementposition (PosS1, PosS2), wobei die wenigstens eine aktivierbare Fahrzeugfunktion (13a, 13b, 13c) eine standortbedingte Funktion umfasst, wobei das Fahrzeug (12) und das zugeordnete Schlüsselelement (14) entfernt voneinander sind, insbesondere in einer Distanz von wenigstens zehn Metern voneinander entfernt sind, und wobei die Schlüsselelementposition (PosS1, PosS2) eines bei der letzten Inbetriebnahme des Fahrzeugs (12) genutzten zugeordneten Schlüsselelements (14) mit einer höheren Priorität bestimmt wird.

11. Verfahren (100) nach Anspruch 10, wobei ein Wahrscheinlichkeitswert (SW) berechnet wird oder/und eine voraussichtliche Dauer berechnet wird bis das zugeordnete Schlüsselelement (14) bei dem Fahrzeug (12) angekommen ist.

12. Verfahren (100) nach Anspruch 10 oder 11, wobei die Fahrzeugposition (PosF) und die Schlüsselelementposition (PosS1, PosS2) mittels eines Satelliten gestützten Positionierungssystems (16), insbesondere GPS, Galileo und dergleichen, bestimmt werden.

13. Verfahren (100) nach Anspruch 12, wobei die Positionsbestimmung des Fahrzeugs (12) und des zugeordneten Schlüsselelements (14) mittels weiterer Lagedaten, wie etwa lokaler Karten (40) oder/und Gebäudeinformationen, verbessert wird..

14. Verfahren (100) nach einem der Ansprüche 11 bis 13, wobei sich wiederholende Muster von Schlüsselelementpositionen (PosS1, PosS2) und Fahrzeugpositionen (PosF) gespeichert werden und derartige Muster erkannt werden.

## Claims

1. System (10) for determining a time at which a vehicle function of a vehicle (12) is started up, said system having at least one vehicle (12);
at least one key element (14) which is associated with the or a relevant vehicle (12);
wherein the vehicle (12) and the associated key element (14) are configured to exchange data with one another,
wherein the system (10) is designed to determine the vehicle position (PosF) and the key element position (PosS1, PosS2),
wherein the system (10) is designed to set the vehicle (12) into a driving mode if the vehicle position (PosF) and the key element position (PosS1, PosS2) are substantially identical, in particular if the key element (14) is located inside the vehicle (12),
**characterised in that** the system (10) is further designed to automatically switch on at least one vehicle function (13a, 13b, 13c) which can be activated when the vehicle (12) is at a standstill, according to a current key element position (PosS1, PosS2), in particular a key element position (PosS1, PosS2) changing relative to the vehicle position (PosF), wherein the at least one activatable vehicle function (13a, 13b, 13c) comprises a location-based function, wherein the vehicle (12) and the associated key element (14) are remote from one another, in particular at a distance of at least ten metres from one another, and wherein the key element position (PosS1, PosS2) of an associated key element (14) used during the last start-up of the vehicle (12) is determined with a higher priority.

2. System (10) according to claim 1, **characterised in that** it is designed to additionally switch on the activatable vehicle function (13a, 13b, 13c) according to a probability value (SW), wherein the probability value (SW) is determined at least according to a changing relative position, wherein the relative position comprises the current comparison between vehicle position (PosF) and key element position (13a, 13b, 13c).

3. System (10) according to claim 1 or 2, **characterised in that** the activatable vehicle function (13a, 13b, 13c) comprises at least one of the following functions:
air-conditioning (13a) an interior of the vehicle;
charging (13b) a battery of the vehicle;
conditioning (13c) a fuel cell of the vehicle.

4. System (10) according to any of the preceding claims, **characterised in that** it comprises at least one server apparatus (18) designed to exchange data with the vehicle (12) and the associated key element (14).

5. System (10) according to claim 4, **characterised in that** the server apparatus (18) is designed to calculate the probability value (SW) or/and to calculate an expected time until the associated key element (14) has arrived at the vehicle (12).

6. System (10) according to any of the preceding claims, **characterised in that** the vehicle (12) and the key element (14) are designed to determine the vehicle position (PosF) and the key element position (PosS1, PosS2) by means of a satellite-based positioning system (16), in particular GPS, Galileo and the like.

7. System (10) according to claim 6, **characterised in that** the server apparatus (18) is designed to improve the position determination of the vehicle (12) and of the associated key element (14) by means of further location data, such as local maps (40) or/and building information.

8. System (10) according to any of the preceding claims, **characterised in that** it is designed to store repeating patterns of key element positions (PosS1, PosS2) and vehicle positions (PosF) and to recognise such patterns.

9. System (10) according to any of the preceding claims, **characterised in that** the key element (14) comprises a vehicle key, a smartphone or/and a key card.

10. Computer-implemented method (100) for determining a time at which a vehicle function is started up, comprising the steps of:
determining (110) the vehicle position (PosF) of a vehicle (12) and the key element position (PosS1, PosS2) of at least one key element (14) associated with the vehicle (12), wherein the vehicle (12) is set into a driving mode if the vehicle position (PosF) and the key element position (PosS1, PosS2) are substantially identical, in particular if the key element (14) is located inside the vehicle (12);
exchanging (120) data between the vehicle (12) and the or a relevant associated key element (14);
automatically switching on (130) at least one vehicle function (13a, 13b, 13c) which can be activated when the vehicle (12) is at a standstill, according to a current key element position (PosS1, PosS2), in particular a key element position (PosS1, PosS2) changing relative to the vehicle position (PosF), wherein the at least one activatable vehicle function (13a, 13b, 13c) comprises a location-based function, wherein the vehicle (12) and the associated key element (14) are remote from one another, in particular at a distance of at least ten metres from one another, and wherein the key element position (PosS1, PosS2) of an associated key element (14) used during the last start-up of the vehicle (12), is determined with a higher priority.

11. Method (100) according to claim 10, wherein a probability value (SW) is calculated or/and an expected time until the associated key element (14) has arrived at the vehicle (12) is calculated.

12. Method (100) according to claim 10 or 11, wherein the vehicle position (PosF) and the key element position (PosS1, PosS2) are determined by means of a satellite-based positioning system (16), in particular GPS, Galileo and the like.

13. Method (100) according to claim 12, wherein the position determination of the vehicle (12) and of the associated key element (14) is improved by means of further location data, such as local maps (40) or/and building information.

14. Method (100) according to any of claims 11 to 13, wherein repeating patterns of key element positions (PosS1, PosS2) and vehicle positions (PosF) are stored and such patterns are recognised.

## Revendications

1. Système (10) de détermination d'un instant de mise en service d'une fonction de véhicule d'un véhicule (12) comprenant au moins un véhicule (12) ;
au moins un élément clé (14), qui est associé au véhicule ou à un véhicule approprié (12) ;
dans lequel le véhicule (12) et l'élément clé associé (14) sont conçus pour échanger des données l'un avec l'autre,
dans lequel le système (10) est conçu pour déterminer la position de véhicule (PosF) et la position d'élément clé (PosS1, PosS2),
dans lequel le système (10) est conçu pour démarrer le véhicule (12) fonctionnant si la position de véhicule (PosF) et la position d'élément clé (PosS1, PosS2) sont sensiblement identiques, en particulier si l'élément clé (14) est situé à l'intérieur du véhicule (12),
**caractérisé en ce que** le système (10) est en outre conçu pour commuter automatiquement au moins une fonction de véhicule (13a, 13b, 13c) qui peut être activée lorsque le véhicule (12) est à l'arrêt, en fonction d'une position d'élément clé (PosS1, PosS2) actuelle, en particulier d'une position d'élément clé (PosS1, PosS2) changeant par rapport à la position de véhicule (PosF), dans lequel la au moins une fonction de véhicule (13a, 13b, 13c) qui peut être activée présente une fonction liée à un emplacement, dans lequel le véhicule (12) et l'élément de clé associé (14) sont distants l'un de l'autre, en particulier à une distance d'au moins dix mètres l'un de l'autre, et dans lequel la position d'élément clé (PosS1, PosS2) d'un élément clé associé (14) utilisé lors de la dernière mise en service du véhicule (12) est déterminée avec une priorité plus élevée.

2. Système (10) selon la revendication 1, **caractérisé en ce qu'**il est conçu pour en outre commuter la fonction de véhicule (13a, 13b, 13c) qui peut être activée en fonction d'une valeur de probabilité (SW), dans lequel la valeur de probabilité (SW) est déterminée au moins en fonction d'une position relative changeante, dans lequel la position relative présente la comparaison continue entre la position de véhicule (PosF) et la position d'élément clé (13a, 13b, 13c).

3. Système (10) selon la revendication 1 ou 2, **caractérisé en ce que** la fonction de véhicule (13a, 13b, 13c) qui peut être activée présente au moins l'une des fonctions suivantes consistant à :
climatiser (13a) un espace intérieur du véhicule ;
charger (13b) une batterie du véhicule ;
conditionner (13c) une pile à combustible du véhicule.

4. Système (10) selon l'une quelconque des revendications précédentes, **caractérisé en ce qu'**il présente au moins un dispositif serveur (18), qui est conçu pour échanger des données avec le véhicule (12) et l'élément clé associé (14).

5. Système (10) selon la revendication 4, **caractérisé en ce que** le dispositif serveur (18) est conçu pour calculer la valeur de probabilité (SW) et/ou pour calculer une durée estimée jusqu'à ce que l'élément clé associé (14) soit arrivé au véhicule (12).

6. Système (10) selon l'une quelconque des revendications précédentes, **caractérisé en ce que** le véhicule (12) et l'élément clé (14) sont conçus pour déterminer la position de véhicule (PosF) et la position d'élément clé (PosS1, PosS2) au moyen d'un système de positionnement assisté par satellite (16), plus particulièrement GPS, Galileo, et analogues.

7. Système (10) selon la revendication 6, **caractérisé en ce que** le dispositif serveur (18) est conçu pour améliorer la détermination de position du véhicule (12) et de l'élément clé associé (14) à l'aide de données de localisation supplémentaires, telles que des cartes locales (40) et/ou des informations de construction.

8. Système (10) selon l'une quelconque des revendications précédentes, **caractérisé en ce qu'**il est conçu pour enregistrer des modèles répétitifs de positions d'élément clé (PosS1, PosS2) et de positions de véhicule (PosF) et pour reconnaître de tels modèles.

9. Système (10) selon l'une quelconque des revendications précédentes, **caractérisé en ce que** l'élément clé (14) présente une clé de véhicule, un smartphone et/ou une carte-clé.

10. Procédé implémenté par ordinateur (100) pour déterminer un instant de mise en service d'une fonction de véhicule, comprenant les étapes consistant à :
déterminer (110) la position de véhicule (PosF) d'un véhicule (12) et la position d'élément clé (PosS1, PosS2) d'au moins un élément clé (14), qui est associé au véhicule (12), dans lequel le véhicule (12) est démarré si la position de véhicule (PosF) et la position d'élément clé (PosS1, PosS2) sont sensiblement identiques, en particulier si l'élément clé (14) est à l'intérieur du véhicule (12) ;
échanger (120) des données entre le véhicule (12) et le ou un élément clé associé respectif (14) ;
commuter (130) automatiquement au moins une fonction de véhicule (13a, 13b, 13c) qui peut être activée lorsque le véhicule (12) est à l'arrêt, en fonction d'une position d'élément clé (PosS1, PosS2) actuelle, en particulier d'une position d'élément clé (PosS1, PosS2) changeante par rapport à la position de véhicule (PosF), dans lequel la au moins une fonction de véhicule (13a, 13b, 13c) qui peut être activée présente une fonction liée à un emplacement, dans lequel le véhicule (12) et l'élément clé associé (14) sont à distance l'un de l'autre, en particulier à une distance d'au moins dix mètres l'un de l'autre, et dans lequel la position d'élément clé (PosS1, PosS2) d'un élément clé associé (14) à la dernière mise en service du véhicule (12) est déterminée avec une priorité plus élevée.

11. Procédé (100) selon la revendication 10, dans lequel une valeur de probabilité (SW) est calculée et/ou une durée estimée est calculée jusqu'à ce que l'élément clé associé (14) soit arrivé au véhicule (12).

12. Procédé (100) selon la revendication 10 ou 11, dans lequel la position de véhicule (PosF) et la position d'élément clé (PosS1, PosS2) sont déterminées au moyen d'un système de positionnement assisté par satellite (16), en particulier GPS, Galileo et analogues.

13. Procédé (100) selon la revendication 12, dans lequel la détermination de position du véhicule (12) et de l'élément clé associé (14) est améliorée au moyen de données de localisation supplémentaires, telles que des cartes locales (40) et/ou des informations de construction.

14. Procédé (100) selon l'une quelconque des revendications 11 à 13, dans lequel des modèles répétitifs de positions d'élément clé (PosS1, PosS2) et de positions de véhicule (PosF) sont enregistrées et de tels modèles sont reconnus.
